(19) Europäisches Patentamt
European Patent Office
Office européen des brevets

(11) **EP 3 561 542 A1**

(12) **EUROPEAN PATENT APPLICATION**

(43) Date of publication:
**30.10.2019  Bulletin 2019/44**

(51) Int Cl.:
***G01S 13/72*** *(2006.01)*     ***G01S 13/93*** *(2006.01)*

(21) Application number: **18169889.5**

(22) Date of filing: **27.04.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Veoneer Sweden AB**<br>**447 83 Vårgårda (SE)**<br><br>(72) Inventor: **Hofmann, Martin**<br>**82178 Puchheim (DE)**<br><br>(74) Representative: **Sandstedt, Jonas Sven James**<br>**WESTPATENT AB**<br>**Almekärrsvägen 11**<br>**443 39 Lerum (SE)** |

(54) **GENERIC OBJECT TRACKING BASED ON SIGNIFICANT POINTS**

(57)     A method for tracking an object using a vehicle sensor, comprising obtaining a set of detections, associated with the object, from the vehicle sensor, and a group motion model associated with the set of detections, defining one or more significant points associated with the object, wherein the one or more significant points represent a spatial extension of the object, determining a significant point motion model for each significant point by adjusting the group motion model based on a corresponding motion of the respective significant point, and tracking each significant point based on the respective significant point motion model.

FIG. 1

EP 3 561 542 A1

## Description

### TECHNICAL FIELD

The present disclosure relates to methods and to sensor system control units for representing and tracking one or more objects using vehicle sensors.

### BACKGROUND

Vehicle environment detection systems, such as for example camera systems, radio detection and ranging (radar) systems and light detection and ranging (lidar) systems, can be mounted on a vehicle in order to detect objects in a vicinity of the vehicle. The obtained detections can be used to implement functions such as speed control and collision prevention, ego motion estimation and scene understanding. For this purpose, it is desired to represent tracked objects in an efficient an accurate manner, and to track the represented objects.

Known methods of representing tracked objects include using point models and polygon models, which are relatively complex.

Furthermore, it is also desired to track not only one, but a plurality of extended objects, moving as well as stationary, in the present field of view. US 9,255,988 describes how radar data, including Doppler measurement data, are used to form clusters, where each cluster represents a respective object.

There is still a need to improve methods for representing detected objects, and for tracking the represented objects.

### SUMMARY

It is an object of the present disclosure to provide improved methods for representing detected objects, and for tracking the represented objects.

This object is obtained by a method for tracking an object using a vehicle sensor. The method comprises obtaining a set of detections associated with the object, from the vehicle sensor, and a group motion model associated with the set of detections. The method also comprises defining one or more significant points associated with the object, wherein the one or more significant points represent a spatial extension of the object. The method also comprises determining a significant point motion model for each significant point by adjusting the group motion model based on a corresponding motion of the respective significant point, and tracking each significant point based on the respective significant point motion model.

This way, the model used to represent an object in a vicinity of the vehicle consists of the set of detections that together form the object. Thus, no model fitting, like box-model or ellipsoid or similar is needed. Instead, the model is represented by a simple labelling of the underlying input detections, i.e., according to some aspects a significant point is a detection from the set of detections. Consequently, an efficient and accurate representation of an object is obtained.

According to aspects, the obtaining comprises obtaining a group motion model comprising a group motion vector. The group motion vector comprises any of; a velocity vector, an acceleration vector, and a turn rate vector. Consequently, the proposed methods are general and can account for different types of motion models in a straight forward manner.

According to aspects, the obtaining comprises retrieving a stored set of detections from a storage medium, and predicting corresponding current detections based on the group motion vector. This way a larger number of detections can be used to represent the object. This larger number of detections often lead to improved accuracy and overall reliability.

According to aspects, the defining comprises defining an L-shape representing the spatial extension of the object, comprising a closest point, a left-most point, and a right-most point, relative to a spatial configuration of the vehicle sensor. This L-shape provides an efficient yet accurate way of representing the spatial extension of the object.

According to aspects, the defining comprises defining a configurable number of extreme points, wherein the configurable number of extreme points define a polygon representing the spatial extension of the object. The polygon representation provides for an accurate way to represent the object. The configurable number of points allow to vary the accuracy of the representation based on, e.g., requirements or based on operating scenario.

According to aspects, the defining comprises defining a mass center point representing an average value of the set of detections, and a radius value, wherein the mass center point and the radius represents the spatial extension of the object. This center point representation provides for a low complexity representation method.

According to aspects, the determining comprises associating one or more detections to each significant point. This way reliability and robustness can be further increased.

According to aspects, the tracking comprises predicting, associating, and updating, wherein the predicting is based on the significant point motion model. Consequently, the proposed method of representing objects is compatible with known tracking methods, such as Kalman or particle filters, which is an advantage.

According to aspects, the vehicle sensor comprises any individual, or combination of, radar sensor, camera sensor, ultrasound sensor, lidar sensor, and laser scanner sensor. Consequently, the proposed methods are applicable or a wide range of sensor types. Th proposed methods are, however, especially suited for radar-based sensor arrangements.

There are also disclosed herein computer programs, sensor system control units, and vehicles, associated with the above-mentioned advantages.

BRIEF DESCRIPTION OF THE DRAWINGS

The present disclosure will now be described more in detail with reference to the appended drawings, where:

Figure 1     shows a schematic top view of a vehicle with a vehicle environment detection system;
Figures 2-4     illustrate object representations;
Figure 5a-5e     illustrates an example sequence of events during object tracking;
Figure 6     schematically illustrates a sensor system control unit;
Figure 7     is a flowchart illustrating methods according to the present disclosure; and
Figure 8     schematically illustrates a sensor system control unit.

DETAILED DESCRIPTION

Aspects of the present disclosure will now be described more fully with reference to the accompanying drawings. The different devices, computer programs and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the disclosure in any way. As used herein, the singular forms "a", "an" and "the" are intended to include the plural forms as well, unless the context indicates otherwise.

A method and corresponding sensor system control unit is described herein which enables representing and tracking arbitrary extended objects using, e.g., an automotive (Doppler) radar. It is appreciated that the representing and the tracking can be performed independently of each other, i.e., the representing does not explicitly require the tracking and vice versa. However, the representing and the tracking are preferably and advantageously used together.

A spatial configuration describes where an object is located in relation to some reference system, and how it is rotated about some axes system.

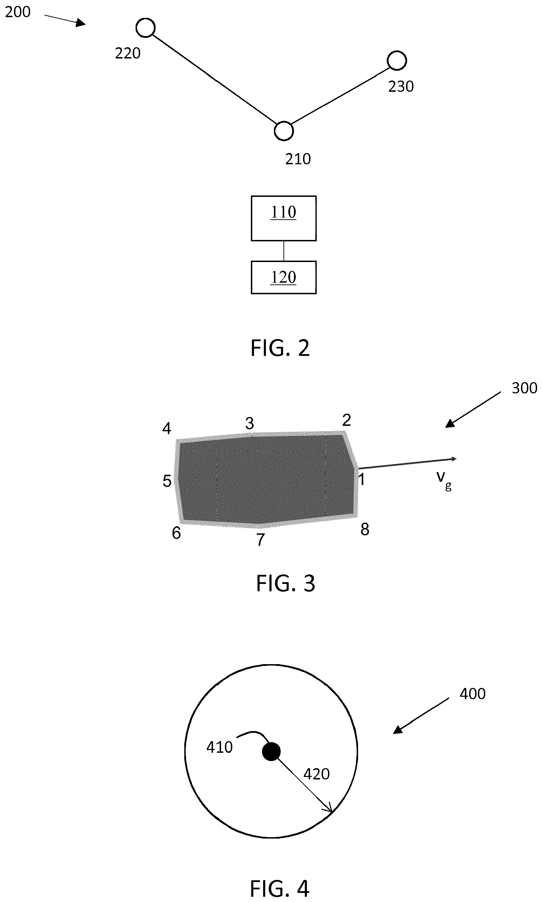

Representing an object means that the spatial configuration, or extension, of the object is described by a limited number of data points. As will be discussed in more detail below in connection to Figures 2-4, such representations may comprise one or more data points.

Tracking an object means that the spatial configuration of the object is followed over time. Tracking an object may comprise suppressing measurement noise inherent in a sensor signal. Known methods for tracking objects using sensor detections comprise, e.g., Kalman filtering, particle filtering, Wiener filtering, sequential minimum mean-squared error estimation, and the like.

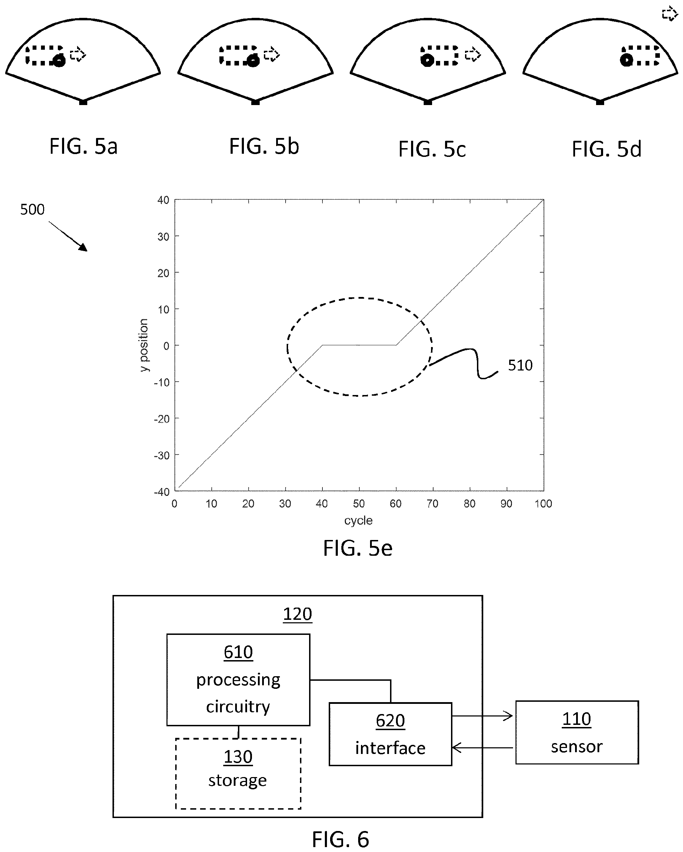

With the proposed non-parametric model, more precisely with a "cloud-of-detections" approach, extended objects can be efficiently defined and also tracked over time. This information is at the same time generic and also complete enough to robustly track significant points on the object silhouette. Besides the generic object representation, the presented approach also defines a systematic solution to the issue of track points sliding on the surface of an extended object or at the border of the field of view. In classical point tracker approaches this "pseudo-motion" has typically led to inaccurate velocity estimates. This issue will be discussed in more detail below in connection to Figures 5a-5e.

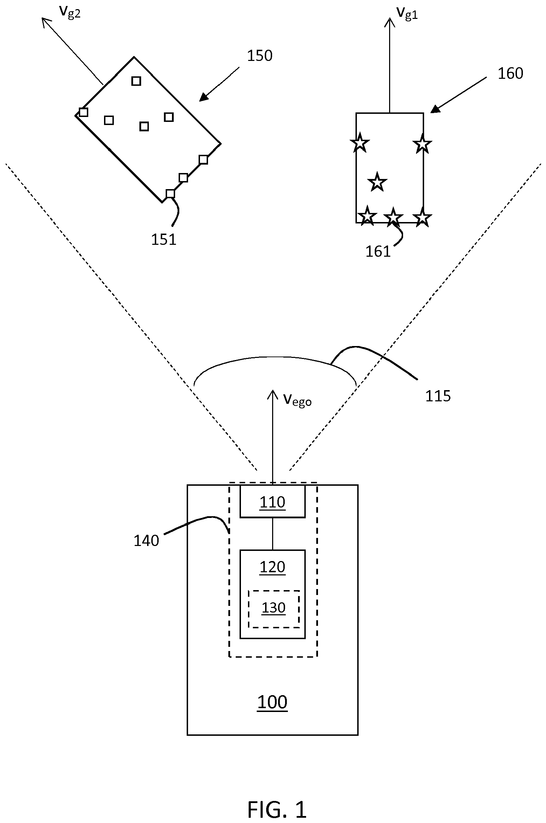

Figure 1 shows a schematic top view of a vehicle 100 with a vehicle environment detection system 140. The vehicle moves in a direction with velocity vector $v_{ego}$. The vehicle environment detection system 140 comprises a vehicle sensor 110 and a sensor system control unit 120. An optional storage module 130 may also be comprised in the sensor system control unit 120. The storage module 130 will be discussed in more detail below.

The sensor system control unit 120 is arranged to control operation of the vehicle sensor 110, and to obtain data from the vehicle sensor, such as detections corresponding to objects 120, 150 in the vicinity of the vehicle 100.

The vehicle sensor 110 may comprise a single sensor or a plurality of sensors. For instance, the vehicle sensor 110 may comprise any of a radar sensor, a camera sensor, an ultrasound sensor, a lidar sensor, and a laser scanner sensor. The vehicle sensor is arranged to generate a number of detections.

A detection, herein, is a data point representing a spatial configuration of an object of part of an object in an environment or vicinity of the vehicle. For instance, in case of a radar sensor, a detection may be a data point indicating a range from the radar transceiver. The detection may also comprise a velocity estimate obtained from a Doppler shift of a received waveform, and an angle or bearing obtained from an angle of arrival of a reflected radar waveform.

New detections are produced more or less continuously by the sensor. Most sensor systems generate detection data on a regular basis, with interval T seconds. For instance, the interval T may correspond to a frame length of a radar signal, or to an image processing duration of a camera-based sensor. Detections may be stored by the storage module 130 and retrieved for processing as needed.

In general, a detection indicates a location in two or three or more dimensions. A detection may, but does not have to, comprise information about a velocity vector indicating a motion direction of the detection.

The vehicle sensor 110 is associated with a field of view 115. Two objects 150, 160 are located in the field of view 115. A first object 160 generates detections marked by stars 161. A second object generates detections marked by squares 151. The first object is associated with a group motion vector $v_{g1}=[v_{g1x}, v_{g1y}]$, and the second object is associated with a group motion vector $v_{g2}=[v_{g2x}, v_{g2y}]$.

It is appreciated that, although the concepts described herein are mainly described using examples in two dimensions, an extension to three dimensions is straight forward.

The group motion vector of an object describes an average motion of the detections associated with the object. However, due to how the object moves in relation to the vehicle sensor, object detections may exhibit motion differing from the group motion vector. For instance, an object may rotate about an axis, i.e., it may be turning with respect to the vehicle sensor 110. In this case some parts of the object may give rise to detections which move faster than some other parts of the object.

When tracking extended objects, such as the two objects 150, 160 giving rise to respective sets of detections, a central concern is the method to represent the extended object. By contrast, for known single-point trackers, the track can simply be represented by a single state vector with, e.g., position, velocity and acceleration. For extended objects a more complex model is required. For example, an extended box shape, or an ellipsoid, or something comparable could be used. This would however increase the number of entries in the state vector, i.e., the dimension of the tracking problem, and it would require more complex algorithms to estimate all the additional states.

Instead of a higher order parametric model, such as an extended box shape or an ellipsoid, it is proposed herein to use a generic non-parametrical object model which does not require any higher order model fitting. Instead, the extended object is represented non-parametrically by the set of all sensor detections that belong to the object. This "cloud" of detections can have arbitrary "shapes" and is thus generic. The object model is realized by labelling the detections which belong to (and are therefore associated to) the object. These labelled detections are herein, according to aspects, referred to as significant points.

In other words, there is disclosed herein a method for representing an object 150, 160 using detections from a vehicle sensor 110. The method comprises obtaining a set of detections 161, 131 associated with the object from the vehicle sensor 110 and representing the object with the set of detections or with a subset of the detections.

This way, the model used to represent an object in a vicinity of the vehicle consists of the set of detections that together form the object. Thus, no model fitting, like box-model or ellipsoid or similar is needed. Instead, the model is represented by a simple labelling of the underlying input detections. This way an efficient and accurate representation of an object is obtained.

According to some aspects, the method also comprises defining one or more significant points associated with the object, wherein the one or more significant points represents a spatial extension of the object.

To increase robustness, according to some aspects, detections from several previous cycles are also considered and are included in the "cloud". In practice, a detection memory or storage unit 130 saves also detection from previous cycles. Thus, according to aspects, the obtaining comprises retrieving a stored set of detections from a storage medium, and predicting corresponding current detections based on a motion vector, such as the group motion vector.

Thus, the model consists of all detections over multiple previous cycles. This increases robustness and results in a better shape estimate. Detections from previous cycles are predicted with the group motion vector to the current cycle to achieve temporal consistency. Prediction using motion vectors in relation to object tracking is known and will not be discussed in detail here.

There are known methods for grouping detections and associating sets of detections to respective objects. Detections can, for instance, be classified according to motion. Detections can also be assigned to different objects using known data association methods, such as probabilistic data association, joint probabilistic data association, multiple hypothesis tracking, and the like. Such methods are known and will not be discussed in more detail here.

In summary, an object can be represented by a set of detections. The set of detections, according to some aspects, comprises current detections obtain directly from the vehicle sensor 110. According to some other aspects, the set also comprises detections retrieved from a storage medium 130, which retrieved detections are first updated by predicting corresponding current detections based on the group motion vector and on the retrieved detections. This way, the representation becomes denser and potentially more accurate in the sense that more detection points are used to represent the object.

Some detections obtained from the vehicle sensor 110 are, according to some aspects, more reliably detected than other detections. For instance, if the vehicle sensor is a radar sensor, then some detections may be associated with a stronger signal and a larger signal to noise ratio than other detections. In such cases the detections may be associated with a weight related to the reliability of the detection.

The detections retrieved from memory and updated by predicting may, according to some aspects, be less reliable or associated with larger error than the more current detections. This reliability may be accounted for by a reliability value or weight associated with each detection in the set of detections used to represent the object.

The objects shown in Figure 1, i.e., objects 160 and 150 may be represented by the entire set of detections associated with the respective object. However, to provide a more efficient representation in terms of complexity, a number of significant points can be selected from the set of detections and used to represent the object. The significant points can be tracked individually, using, e.g., point trackers, based on the detections. Systems such as collision avoidance can then be based on the significant points alone, and not on the entire set of detections associated with an object. Most notable the closest, left-most and right-most points can be defined as significant points on the cloud. Furthermore, points in the moving direction of the vehicle can be defined to represent the object in its moving direction. For example, eight points (but not limited to eight) gives a good abstraction.

Figures 2-4 illustrate example object representations based on significant points. The representations often comprise fewer points than the number of detections in the set of detections associated with an object, and therefore provide a more efficient representation in terms of computational complexity.

In Figure 2, three points in an L-shape 200 have been selected as significant points. The L-shape 200 represents a spatial extension of the object. It comprises a closest point 210 which is located at the smallest distance from the vehicle sensor 110, a left-most point 220, which is the left-most extreme point of the object representation, and a right-most point 230, which is the right-most extreme point of the object representation 200.

In Figure 3, a configurable number of extreme points are used to represent the object. The extreme points define a polygon 300 representing the spatial extension of the object. In the example of Figure 3, eight points spanning in the motion direction $v_g$ of the object, sometimes also referred to as octagon, have been selected;

    1 Front is the point which is farthest out in motion direction,

    2 Front Left is the point which is farthest out in motion direction minus 45°,

    3 Left is the point which is farthest out in motion direction minus 90°,

    4 Rear Left is the point which is farthest out in driving direction minus 135°,

    5 Rear is the point which is farthest out in driving direction minus 180°,

    6 Rear Right is the point which is farthest out in driving direction plus 135°,

    7 Right is the point which is farthest out in driving direction plus 90°, and

    8 Front Right is the point which is farthest out in driving direction plus 45°.

The eight points are found by searching the "cloud", or set of detections, in 8 different directions. For each considered direction, the point which has the highest distance is selected as significant point.

Figure 4 illustrates another example representation 400 using a single significant point and a radius measure. Here, a point 410 closest to the center of the set of detections is selected as significant point. Alternatively, a mass center point representing an average value of the set of detections can be defined and used as center point. A measure of radius 420 is determined to represent the spatial extension of the tracked objects. The radius measure can for instance be selected as the maximum distance from the selected center point to the detection at maximum distance from the center point.

It is appreciated that Figures 2-4 are only examples of the representation based on significant points. The proposed methods and techniques are applicable for a wide variety of different representations based on the selecting of significant points.

As noted above, the complete set of detections can also be used to represent the object. In this case, the defining of representation comprises defining all detections in the set of detections as significant points.

Each significant point can be tracked independently using respective tracking filters, such as Kalman filters or a particle filters. This enables a significant complexity reduction compared to the joint tracking of a complex model of an extended object, due to the dimensionality of the models involved. In every cycle, i.e. every time duration T mentioned above, out of the set of detections, a relevant detection or combined value obtained by combining a number of detections is selected and fed as measurement to a tracker. For example, assume that the front-most point 1 in Figure 3 is to be tracked and filtered. Then, out of all new detections received in a radar cycle, possibly also including detection retrieved from memory and updated by prediction, the front-most input detection is identified and used as the input to the filter for the front-most point. In a similar fashion the other seven points can be tracked over time. This way a low complexity tracking approach is obtained that is still accurate and provides a robust representation of an objects spatial configuration over time. Notably, the association problem, where detections are associated with tracked objects, is simplified, since the association problem reduces to a much less complex selection problem.

For a radar sensor, such as a Doppler radar sensor, the point on an extended object which is most robust and best visible is typically the closest point to the radar transceiver. The same is often true for other types of sensors, like lidar sensors and camera sensors. Therefore, tracking the closest point is of special interest. Following the above discussed principle, out of the "cloud" of detections, or set of detection, obtained for an object at the current sensor cycle, the one detection which is closest to the radar sensor is selected and fed to the filter. Thus, the association problem is reduced to selecting the closest point, which is a sorting problem that is much less complex than the association problem.

However, an issue with this straight forward approach of using significant points for representing and tracking arises at the border of the field of view or when the closest point is sliding on the surface of the extended object. This "pseudo"-motion would have a wrong input to the tracking filter, as will now be explained.

In Figures 5a-5d, an extended object shown as a dashed line rectangle is moving from left to right in the sensor field of view with a constant speed. The closest point shown as a black dot is being tracked by, e.g., a Kalman filter. This Kalman filter maintains a state vector p which is updated using detections d and a motion model A describing an expected motion of the significant point.

In Figure 5a, the closest point is aligned with the front right corner of the extended object. During this phase, the closest point moves with the group velocity of the object.

In Figure 5b and Figure 5c, the object moves through the field of view, but the closest point stays essentially at the same position, i.e., the position variable of the state vector corresponding to the point does not change value significantly. This means that the closest point, marked by the black dot, is "sliding" on the edge of the extended object facing the vehicle sensor. This happens until the closest point is aligned with the rear right corner of the extended object, as shown in Figure 5d. From this point on in time, the closest point again moves with the group velocity vector.

Figure 5e shows lateral position 500 of the closest point of the extended object travelling from left to right in the sensor field of view in Figure 5a-5d. The object is moving with constant velocity along the y-axis. The resulting y position of the closest point shows linear motion, except during the time interval 510 when the closest point is "sliding" along the edge of the extended object. As such, even though the object motion is strictly linear throughout this example scenario, the positional change is highly non-linear. Directly applying a linear motion filter such as a Kalman filter would lead to wrong position and velocity estimates. Mostly, because the apparent change in position becomes 0 in the "sliding" part, a directly applied velocity filter would attempt to reduce the velocity. This is sometimes referred to as the velocity drop issue.

To mitigate this velocity drop issue, it is proposed to address the problem by enhancing the prediction stage of the filtering process for tracking the significant points. This is achieved by leveraging the non-parametric extended object model which was discussed above. In essence, the idea is based on extending the prediction stage in the tracking process in such a way that the extended shape of the object is considered, as will now be discussed in more detail.

A typical filter follows the steps 1) Prediction, 2) Association, and 3) Update. In the prediction stage, the model which is described by a state vector x is predicted to the next cycle. Then new incoming data is associated and finally the state vector is updated.

There are known methods for predicting and or updating. For instance, a Kalman filter or a particle filter can be used for the predicting and for the updating. There are also known methods for the associating. For instance, according to aspects, the association may be defined by the representation, i.e., is the closest point is tracked then the closest detection may always be associated. According to other aspects, various probabilistic data association methods can be employed, including weighted methods that account for detection data reliability.

The prediction step is formally described by a state transition function x(t+1)=f(x(t)), t represents time, and where f() represents the motion model.

In the following, the approach is demonstrated by a linear state transition matrix, but the method is not limited to this simple motion model. For example, in case of a linear tracker with position state and velocity state $x_t=[p;v]=[p_x,p_y,v_x,v_y]$ the (linear) state-transition can be written as $x_{t+1}=Ax_t$ with state transition matrix A given as

$$A = \begin{bmatrix} 1 & 0 & T & 0 \\ 0 & 1 & 0 & T \\ 0 & 0 & 1 & 0 \\ 0 & 0 & 0 & 1 \end{bmatrix}.$$

It is proposed herein to limit the prediction by a prediction factor $\alpha \in [0..1]$ using the non-parametric shape information. The state transition matrix is then given as

$$A = \begin{bmatrix} 1 & 0 & \alpha \cdot T & 0 \\ 0 & 1 & 0 & \alpha \cdot T \\ 0 & 0 & 1 & 0 \\ 0 & 0 & 0 & 1 \end{bmatrix}.$$

In the example of tracking the closest point, this would mean that between cycle 0 and 40 as shown in Figure 5e, $\alpha=1$. Between cycle 40 and 60 as shown in Figure 5e, $\alpha=0$. Between cycle 60 and 100 as shown in Figure 5e, $\alpha=1$ again.

According to an example, the following procedure to find the prediction factor $\alpha$ applies to all tracked significant points. According to aspects, each tracking filter tracks a respective significant point independently of the other tracking filters tracking other significant points. Assume that a significant point is being tracked by a tracking filter. The significant point has estimated (or filtered) position $p = [p_x,p_y]$ and is associated with group motion vector $v=[v_x,v_y]$, i.e., the set of detections is moving as a whole according to the group motion vector. According to this example, the calculation or determining of the prediction factor $\alpha$ is done using the following processing steps: All points of the non-parametric model (i.e. the "cloud" or set of detections) are predicted one cycle using the group motion vector v. That means that each detection d is moved by

$$d_{new} = d_{old} + v \cdot T$$

Here it is assumed that the update interval of the vehicle sensor is periodic with interval T seconds. The extension to a non-periodic update interval is straight forward. On this "predicted cloud" or set of detections, the detection $d_s$ which corresponds to the tracked significant point is found. For example, if the closest point is to be tracked, then the detection data point in the set of detections which is closest to the vehicle sensor is selected.

This results in the "cloud-based prediction vector", where T is the cycle time, or update interval:

$$V = \frac{(d_s - p)}{T}$$

It is appreciated that V corresponds to a motion vector which has moved the filtered position p to the selected detection $d_s$ in T seconds. Referring back again to Figures 5a-5d, it is seen that the value of V starts at cycle 0 at a value similar the group motion vector v. However, during cycles 40-60, the value of V is reduced, due to the sliding effect of the closest point. During this period of time 510, the motion of the closest point corresponds better to a constant position model than to a constant velocity model, i.e., the motion of the significant point is better described by a model A';

$$A' = \begin{bmatrix} 1 & 0 & 0 & 0 \\ 0 & 1 & 0 & 0 \\ 0 & 0 & 1 & 0 \\ 0 & 0 & 0 & 1 \end{bmatrix}.$$

The normalized projection of the "cloud-based prediction vector" V on the group motion vector v gives the "unbound" prediction factor:

$$\hat{\alpha} = \frac{v \cdot V}{\|v\| \cdot \|v\|} = \frac{v \cdot V}{\|v\|^2}$$

For further quality this "unbound" prediction factor can further be limited to ensure smooth prediction results:

$$\alpha = \max(\min(\hat{\alpha}, 1), 0)$$

Using this prediction factor essentially decouples position and velocity in case of the significant point sliding on the object contour.

The concept can also be exemplified using a constant acceleration model. Suppose that the state is one-dimensional for brevity, but also includes acceleration a. The state vector is then given by $x_t = [p_x, v_x, a_x]$ the (linear) state-transition can again be written as $x_{t+1} = Ax_t$ with state transition matrix A given as

$$A = \begin{bmatrix} 1 & T & T^2 \\ 0 & 1 & T \\ 0 & 0 & 1 \end{bmatrix}.$$

The state transition matrix accounting for prediction factors is, according to some aspects, then given as

$$A = \begin{bmatrix} 1 & \alpha T & \alpha T^2 \\ 0 & 1 & \alpha T \\ 0 & 0 & 1 \end{bmatrix}.$$

The factor $\alpha$ - as in the previous example - is the prediction factor, which accounts for discrepancies between the velocity of the significant point and the group motion model velocity. As before, the "cloud-based prediction vector" of the significant point can be determined as

$$V = \frac{(d_s - p)}{T}.$$

The normalized projection of the "cloud-based prediction vectors" V on the corresponding group motion vector v gives the "unbound" prediction factors

$$\hat{\alpha} = \frac{v \cdot V}{\|v\| \cdot \|v\|} = \frac{v \cdot V}{\|v\|^2}.$$ Just as in the previous example, the "unbound" prediction factor can be bound to a range between zero and one to avoid degenerate results. In case that a sliding phenomenon as discussed above in connection to Figures 5a-5e is detected, the prediction factor $\alpha$ will go to some small value which effectively deactivates the prediction which would result through either velocity or acceleration.

In this way, significant points can be tracked as points on the non-parametric cloud with minor impact from sliding effects. A method is thus proposed to account for the prediction of the significant points by using the non-parametric extended object model. This effectively decouples position and velocity in case of sliding points on the object contour. This most notably solves the "velocity drop issue", which can happen if extended object shape is not considered.

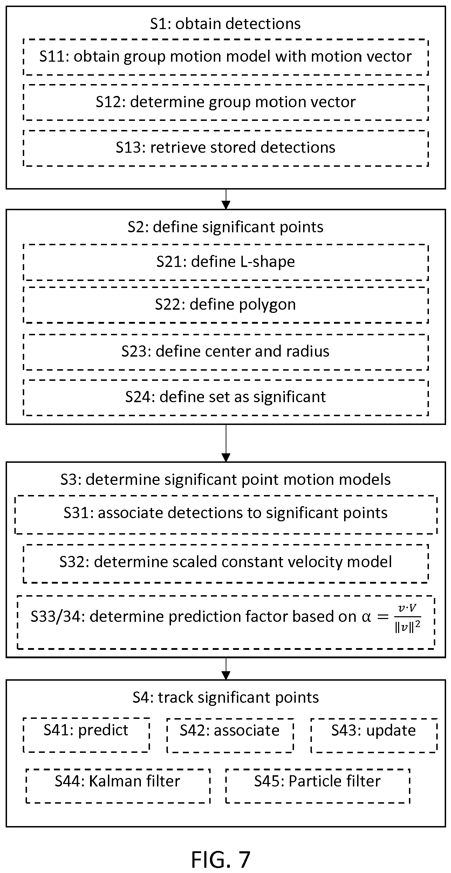

More general embodiments of the exemplified method will now be described with reference to Figures 6 and 7.

The various aspects of the methods described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc., that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Figure 6 schematically illustrates, in terms of a number of functional units, the components of a sensor system control unit 120 according to an embodiment of the discussions herein. Processing circuitry 610 is provided using any combination of one or more of a suitable central processing unit CPU, multiprocessor, microcontroller, digital signal processor DSP, etc., capable of executing software instructions stored in a computer program product, e.g. in the form of a storage medium 130. The processing circuitry 610 may further be provided as at least one application specific integrated circuit ASIC, or field programmable gate array FPGA.

Particularly, the processing circuitry 610 is configured to cause the control unit 120 to perform a set of operations, or steps. For example, the storage medium 130 may store the set of operations, and the processing circuitry 610 may be configured to retrieve the set of operations from the storage medium 130 to cause the control unit 120 to perform the set of operations. The set of operations may be provided as a set of executable instructions. Thus, the processing circuitry 610 is thereby arranged to execute methods as herein disclosed.

The storage medium 130 may also comprise persistent storage, which, for example, can be any single one or combination of magnetic memory, optical memory, solid state memory or even remotely mounted memory.

The control unit 120 may further comprise an interface 620 for communications with at least one external device, such as a vehicle sensor 110. As such the interface 620 may comprise one or more transmitters and receivers, comprising analogue and digital components and a suitable number ports for wireline or wireless communication.

The processing circuitry 610 controls the general operation of the control unit 120 e.g. by sending data and control signals to the interface 620 and the storage medium 130, by receiving data and reports from the interface 620, and by retrieving data and instructions from the storage medium 130. Other components, as well as the related functionality, of the control node are omitted in order not to obscure the concepts presented herein.

Thus, Figure 6 illustrates a sensor system control unit 120 for tracking an object 150, 160 using a vehicle sensor 110.

There is also disclosed herein a vehicle 100 comprising the sensor system control unit 120.

Figure 7 is a flow chart illustrating methods. There is shown a method for tracking an object 150, 160 using a vehicle sensor 110. The method comprises obtaining S1 a set of detections 161, 151, associated with the object, from the vehicle sensor 110, and a group motion model associated with the set of detections. The set of detections comprises detections such as those discussed above in connection to Figure 1. The group motion model was also discussed above. The method also comprises defining S2 one or more significant points associated with the object 150, 160, wherein the one or more significant points represent a spatial extension of the object. The significant points, and examples thereof, was discussed above, e.g., in connection to Figures 2-4. It is appreciated that the significant points may, according to some aspects, correspond to the entire set of detections. The method furthermore comprises determining S3 a significant point motion model for each significant point by adjusting the group motion model based on a corresponding motion of the respective significant point. The adjusting of the group motion model allows for differences between the significant point motion model and the group motion model. This solves or at least alleviates the problems with 'sliding' discussed above in connection to Figure 5a-5e. For instance, a significant point undergoing 'sliding' will be tracked using a motion model different from the group motion model. The method also comprises tracking S4 each significant point based on the respective significant point motion model. The individual tracking of significant points is less complex than tracking a more complex higher order model of an extended object.

According to aspects, the obtaining S1 comprises obtaining S11 a group motion model comprising a group motion vector, the group motion vector comprising any of; a velocity vector, an acceleration vector, and a turn rate vector. Thus, the proposed methods are applicable to a wide variety of different motion models and tracking systems.

According to aspects, the obtaining S1 comprises determining S12 the group motion vector based on the set of detections. The group motion model can be determined in a number of different ways. For instance, the group motion model may be obtained during the extraction of the set of detections from a larger set of detections. The larger set of detections may be sorted according to motion, and a set of detections corresponding to an object can be extracted. The group motion model then describes the set of detections. According to other aspects, the group motion model may be identified and possibly also tracked based on the set of detections over time. For instance, the set of detections may correspond to detections obtained by, e.g., a camera-based system. The group motion model may then be derived based on image processing of the obtained camera detections.

According to aspects, the obtaining S1 comprises retrieving S13 a stored set of detections from a storage medium 530, and predicting corresponding current detections based on the group motion vector. Thus, previous detections are updated to a current time instant by extrapolating, e.g., position coordinates using the group motion vector. This way the previous detections can be included in the set of detections, which results in a more dense set of detections, or detection "cloud" as discussed above.

According to aspects, the defining S2 comprises defining S21 an L-shape 200 representing the spatial extension of the object, comprising a closest point 210, a left-most point 220, and a right-most point 230, relative to a spatial configuration of the vehicle sensor 110. This L-shape was discussed above in connection to Figure 2.

According to aspects, the defining S2 comprises defining S22 a configurable number of extreme points, wherein the configurable number of extreme points define a polygon representing the spatial extension of the object. This type of polygon was exemplified in connection to Figure 3, where an octagon was illustrated.

According to aspects, the defining S2 comprises defining S23 a mass center point representing an average value of the set of detections, and a radius value, wherein the mass center point and the radius represents the spatial extension of the object. This type of significant single point with an accompanying radius was shown and discussed above in connection to Figure 4.

Also, as mentioned above, the defining S2, according to aspects, comprises defining S24 all detections in the set of detections as significant points. This way the object is represented and tracked using all detections in the set of detections, not just by a subset of the detections.

According to aspects, the determining S3 comprises associating S31 one or more detections to each significant point. The associating can be performed based on a pre-determined selection rule. For instance, in case the L-shape is used to represent the object, then the association follows from the definition of the representation, i.e., the closest detection is associated with the closest point 210, the left-most detection is associated with the left-most significant point 220, and the right-most detection in the set of detections is associated with the right-most significant point 230 as seen from the vehicle sensor 110.

According to aspects, the determining S3 comprises determining S32 the significant point motion model as a scaled constant velocity model

$$ M1 = \begin{bmatrix} 1 & 0 & \alpha T & 0 \\ 0 & 1 & 0 & \alpha T \\ 0 & 0 & 1 & 0 \\ 0 & 0 & 0 & 1 \end{bmatrix}, $$

where M1 is a constant velocity motion model, T is an update time interval and $\alpha$ is a prediction factor determined based on the corresponding motion of the respective significant point. This type pf determining was discussed above when giving an example of the processing.

According to aspects, $\alpha$ is determined S33 as

$$ \alpha = \frac{v \cdot V}{\|v\|^2}, \quad \text{where } v = [v_x \ v_y] \text{ is a group velocity vector} $$

comprised in the group motion model, and $V = \frac{d_s - p}{T}$,

where $d_s = [d_{s,x} \ d_{s,y}]$ is a detection from the set of detections associated with the significant point, $p = [p_x \ p_y]$ is a tracked location of the significant point, and T is an update time interval.

According to aspects, $\alpha$ is determined S34 as

$$ \alpha = max\left(min\left(\frac{v \cdot V}{\|v\|^2}, 1\right), 0\right), \quad \text{where } v = [v_x \ v_y] $$

is a group velocity vector comprised in the group motion model, and $V = \frac{d_s - p}{T}$, where $d_s = [d_{s,x} \ d_{s,y}]$ is a detection from the set of detections associated with the significant point, $p = [p_x \ p_y]$ is a tracked location of the significant point, and T is an update time interval.

According to aspects, the tracking S4 comprises predicting S41, associating S42, and updating S43, wherein the predicting is based on the significant point motion model.

According to aspects, the predicting S41 and the updating S43 comprises predicting and updating S44 by a Kalman filter.

According to aspects, the predicting S41 and the updating S43 comprises predicting and updating S45 by a particle filter.

According to aspects, the vehicle sensor 110 comprises any of a radar sensor, a camera sensor, an ultrasound sensor, a lidar sensor, and a laser scanner sensor.

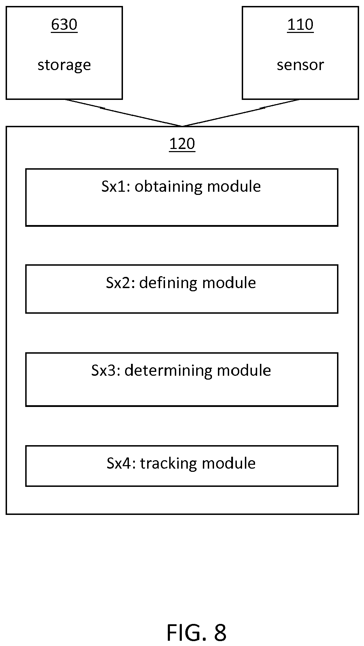

With reference to Figure 8, there is also disclosed herein a sensor system control unit 120 for tracking an object 150, 160 using a vehicle sensor 110, comprising;

an obtaining module Sx1 arranged to obtain a set of detections 161, 151, associated with the object, from the vehicle sensor 110, and a group motion model associated with the set of detections,
a defining module Sx2 arranged to define one or more significant points associated with the object 150, 160, wherein the one or more significant points represent a spatial extension of the object,
a determining module Sx3 arranged to determine a significant point motion model for each significant point by adjusting the group motion model based on a corresponding motion of the respective significant point, and
a tracking module Sx4 arranged to track each significant point based on the respective significant point motion model.

The different modules of the sensor system control unit 120 are furthermore arranged to perform the operations illustrated and discussed in connection to Figure 7 above.

Consequently, according to aspects, the obtaining module Sx1 comprises is arranged to obtain a group motion model comprising a group motion vector, the group motion vector comprising any of; a velocity vector, an acceleration vector, and a turn rate vector.

According to aspects, the obtaining module Sx1 is arranged to determine the group motion vector based on the set of detections.

According to aspects, the obtaining module Sx1 is arranged to retrieve a stored set of detections from a storage medium 530, and to predict corresponding current detections based on the group motion vector.

According to aspects, the defining module Sx2 is arranged to define an L-shape 200 representing the spatial extension of the object, comprising a closest point 210, a left-most point 220, and a right-most point 230, relative to a spatial configuration of the vehicle sensor 110.

According to aspects, the defining module Sx2 is arranged to define a configurable number of extreme points, wherein the configurable number of extreme points define a polygon representing the spatial extension of the object.

According to aspects, the defining module Sx2 is arranged to define a mass center point representing an average value of the set of detections, and a radius value, wherein the mass center point and the radius represents the spatial extension of the object.

According to aspects, the defining module Sx2 is arranged to define all detections in the set of detections as significant points.

According to aspects, the determining module Sx3 is arranged to associate one or more detections to each significant point.

According to aspects, the determining module Sx3 is arranged to determine the significant point motion model as a scaled constant velocity model

$$M1 = \begin{bmatrix} 1 & 0 & \alpha T & 0 \\ 0 & 1 & 0 & \alpha T \\ 0 & 0 & 1 & 0 \\ 0 & 0 & 0 & 1 \end{bmatrix},$$

where M1 is a constant velocity motion model, T is an update time interval and $\alpha$ is a prediction factor determined based on the corresponding motion of the respective significant point.

According to aspects, $\alpha$ is determined as

$\alpha = \frac{v \cdot V}{\|v\|^2}$, where $v = [v_x\ v_y]$ is a group velocity vector comprised in the group motion model, and $V = \frac{d_s - p}{T}$,

where $d_s = [d_{s,x}\ d_{s,y}]$ is a detection from the set of detections associated with the significant point, $p = [p_x\ p_y]$ is a tracked location of the significant point, and T is an update time interval.

According to aspects, $\alpha$ is determined S34 as

$\alpha = \max\left(\min\left(\frac{v \cdot V}{\|v\|^2}, 1\right), 0\right)$, where $v = [v_x\ v_y]$ is a group velocity vector comprised in the group motion model, and $V = \frac{d_s - p}{T}$, where $d_s = [d_{s,x}\ d_{s,y}]$ is a detection from the set of detections associated with the significant point, $p = [p_x\ p_y]$ is a tracked location of the significant point, and T is an update time interval.

According to aspects, the tracking module Sx4 is arranged to predict, to associate, and to update, wherein the predicting is based on the significant point motion model.

**Claims**

1. A method for tracking an object (150, 160) using a vehicle sensor (110), the method comprising;
obtaining (S1) a set of detections (161, 151), associated with the object, from the vehicle sensor (110), and a group motion model associated with the set of detections, defining (S2) one or more significant points associated with the object (150, 160), wherein the one or more significant points represent a spatial extension of the object, determining (S3) a significant point motion model for each significant point by adjusting the group motion model based on a corresponding motion of the respective significant point, and
tracking (S4) each significant point based on the respective significant point motion model.

2. The method according to claim 1, wherein the obtaining (S1) comprises obtaining (S11) a group motion model comprising a group motion vector, the group motion vector comprising any of; a velocity vector, an acceleration vector, and a turn rate vector.

3. The method according to claim 2, wherein the obtaining (S1) comprises determining (S12) the group motion vector based on the set of detections.

4. The method according to claim 2 or 3, wherein the obtaining (S1) comprises retrieving (S13) a stored set of detections from a storage medium (530), and predicting corresponding current detections based on the group motion vector.

5. The method according to any of claims 1-4, wherein the defining (S2) comprises defining (S21) an L-shape (200) representing the spatial extension of the object, comprising a closest point (210), a left-most point (220), and a right-most point (230), relative to a spatial configuration of the vehicle sensor (110).

6. The method according to any of claims 1-4, wherein the defining (S2) comprises defining (S22) a configurable number of extreme points, wherein the configurable number of extreme points define a polygon representing the spatial extension of the object.

7. The method according to any of claims 1-4, wherein the defining (S2) comprises defining (S23) a mass center point representing an average value of the set of detections, and a radius value, wherein the mass center point and the radius represents the spatial extension of the object.

8. The method according to any previous claim, wherein the determining (S3) comprises determining (S32) the significant point motion model as a scaled constant velocity model

$$M1 = \begin{bmatrix} 1 & 0 & \alpha T & 0 \\ 0 & 1 & 0 & \alpha T \\ 0 & 0 & 1 & 0 \\ 0 & 0 & 0 & 1 \end{bmatrix},$$

where M1 is a constant velocity motion model, T is an update time interval and $\alpha$ is a prediction factor determined based on the corresponding motion of the respective significant point.

9. The method according to claim 8, where $\alpha$ is determined (S33) as $\alpha = \frac{v \cdot V}{\|v\|^2}$, where $v = [v_x \ v_y]$ is a group velocity vector comprised in the group motion model, and $V = \frac{d_s - p}{T}$, where $d_s = [d_{s,x} \ d_{s,y}]$ is a detection from the set of detections associated with the significant point, $p = [p_x \ p_y]$ is a tracked location of the significant point, and T is an update time interval.

10. The method according to claim 8, where $\alpha$ is determined (S34) as

$$\alpha = max \left( min \left( \frac{v \cdot V}{\|v\|^2}, 1 \right), 0 \right),$$ where $v = [v_x \ v_y]$ is a group velocity vector comprised in the group motion model, and $V = \frac{d_s - p}{T}$, where $d_s = [d_{s,x} \ d_{s,y}]$ is a detection from the set of detections associated with the significant point, $p = [p_x \ p_y]$ is a tracked location of the significant point, and T is an update time interval.

11. The method according to any previous claim, wherein the tracking (S4) comprises predicting (S41), associating (S42), and updating (S43), wherein the predicting is based on the significant point motion model.

12. The method according to any previous claim, wherein the vehicle sensor (110) comprises any of a radar sensor, a camera sensor, an ultrasound sensor, a lidar sensor, and a laser scanner sensor.

13. A computer program comprising computer program code which, when executed in a sensor system control unit (120), causes the sensor system control unit (120) to execute a method according to any of claims 1-12.

14. A sensor system control unit (120) for tracking an object (150, 160) using a vehicle sensor (110), comprising;
an obtaining module (Sx1) arranged to obtain a set of detections (161, 151), associated with the object, from the vehicle sensor (110), and a group motion model associated with the set of detections,
a defining module (Sx2) arranged to define one or more significant points associated with the object (150, 160), wherein the one or more significant points represent a spatial extension of the object,
a determining module (Sx3) arranged to determine a significant point motion model for each significant point by adjusting the group motion model based on a corresponding motion of the respective significant point, and
a tracking module (Sx4) arranged to track each significant point based on the respective significant point motion model.

15. A vehicle (100) comprising the sensor system control

**EP 3 561 542 A1**

unit (120) according to claim 14.

FIG. 1

200

220

210

230

110

120

FIG. 2

300

4    3    2

5    1    $v_g$

6    7    8

FIG. 3

400

410

420

FIG. 4

FIG. 5a

FIG. 5b

FIG. 5c

FIG. 5d

500

510

FIG. 5e

120

610
processing
circuitry

130
storage

620
interface

110
sensor

FIG. 6

S1: obtain detections

S11: obtain group motion model with motion vector

S12: determine group motion vector

S13: retrieve stored detections

S2: define significant points

S21: define L-shape

S22: define polygon

S23: define center and radius

S24: define set as significant

S3: determine significant point motion models

S31: associate detections to significant points

S32: determine scaled constant velocity model

S33/34: determine prediction factor based on $\alpha = \frac{v \cdot V}{\|v\|^2}$

S4: track significant points

S41: predict     S42: associate     S43: update

S44: Kalman filter     S45: Particle filter

FIG. 7

| 630 |
| storage |

| 110 |
| sensor |

| 120 |
| Sx1: obtaining module |
| Sx2: defining module |
| Sx3: determining module |
| Sx4: tracking module |

FIG. 8

Europäisches
Patentamt

European
Patent Office

Office européen
des brevets

# EUROPEAN SEARCH REPORT

Application Number

EP 18 16 9889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Sylvia Pietzsch: "Modellgestützte Sensordatenfusion von Laserscanner und Radar zur Erfassung komplexer Fahrzeugumgebungen", <br><br> 7 July 2015 (2015-07-07), XP055516263, Retrieved from the Internet: URL:http://mediatum.ub.tum.de/doc/1236700/43493.pdf [retrieved on 2018-10-17] | 1-7, 11-15 | INV. G01S13/72 G01S13/93 |
| A | * chap. 4, sec. 3.2.2; figures 2.6, 3,14; table 2.2 * ----- | 8-10 | |
| A | KAY CH. FUERSTENBERG ET AL: "Pedestrian recognition and tracking of vehicles using a vehicle based multilater laserscanner", MEASUREMENT., 20 November 2003 (2003-11-20), pages 1-12, XP055516338, GB ISSN: 0263-2241 * figure 7 * ----- | 1-15 | |
| A | SÉRGIO SANTOS ET AL: "Tracking of multi-obstacles with laser range data for autonomous vehicles", 3RD NATIONAL FESTIVAL OF ROBOTICS SCIENTIFIC MEETING (ROBOTICA 2003), 9 May 2003 (2003-05-09), pages 59-65, XP055516459, Lissabon * the whole document * ----- -/-- | 1-15 | |

TECHNICAL FIELDS SEARCHED (IPC)

G01S

The present search report has been drawn up for all claims

| Place of search | Date of completion of the search | Examiner |
|---|---|---|
| Munich | 18 October 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 16 9889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SCHUTZ MARKUS ET AL: "Occupancy grid map-based extended object tracking", 2014 IEEE INTELLIGENT VEHICLES SYMPOSIUM PROCEEDINGS, IEEE, 8 June 2014 (2014-06-08), pages 1205-1210, XP032620387, DOI: 10.1109/IVS.2014.6856504 [retrieved on 2014-07-15] * the whole document * | 1-15 | |
| A | SCHUTZ MARKUS ET AL: "Simultaneous tracking and shape estimation with laser scanners", PROCEEDINGS OF THE 16TH INTERNATIONAL CONFERENCE ON INFORMATION FUSION, ISIF ( INTL SOCIETY OF INFORMATION FUSI, 9 July 2013 (2013-07-09), pages 885-891, XP032512327, ISBN: 978-605-86311-1-3 [retrieved on 2013-10-18] * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 18 October 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 561 542 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9255988 B